# EUROPEAN PATENT APPLICATION

(11) **EP 4 035 870 A1**
(43) Date of publication of application: **03.08.2022**
(21) Application number: 21218362.8
(22) Date of filing: 30.12.2021
(51) Int. Cl.: B29C 63/00, B29C 63/04, B29C 63/48

(54) **METHOD AND MACHINE FOR WRAPPING PROFILES WITH A WRAPPING POIL**

(30) Priority: 29.01.2021 IT 202100001919
(71) Applicant: W.P.R. S.r.l., 31027 Spresiano (IT)
(72) Inventor: BALDASSIN, Remo, 31027 Spresiano (TV) (IT)
(74) Representative: Zamprogno, Bruno

(57) **Abstract**

A method for wrapping profiles (2) with a wrapping foil (3) and entailing applying a bonding layer on a surfacer (3a) of the foil (3) by means of an applicator device (6), applying a primer on the surface (3a) of the foil (3) by means of a primer applicator device (7), coupling the foil (3) to the surface to be wrapped (2a) of the profiles (2) so that the surface (3a) provided with the bonding layer and the primer firmly adheres to the surface to be wrapped (2a) of the profiles (2).

## Description

### CROSS-REFERENCE TO RELATED APPLICATIONS

This Patent Application claims priority from Italian Patent Application No. 102021000001919 filed on January 29, 2021.

### TECHNICAL FIELD

The invention relates to a method and a machine for wrapping profiles with a decorating wrapping foil.

### BACKGROUND ART

As it is known, profile wrapping machines generally comprise a conveyor stand, which receives, in an input station, raw profiles to be wrapped and moves them, by means of motor-driven rollers, along a feeding path, which ends in the area of an output station, which releases profiles wrapped with a foil.

Along the feeding path of the conveyor stand there are, one after the other starting from the input station and moving towards the output station: a primer applicator device, a glue applicator apparatus and a fixing assembly.

The glue applicator apparatus is structured to: unwound the foil from a reel, spread the glue on a surface of the foil and attach the bonding surface of the foil onto the profile.

The fixing assembly is arranged downstream of the glue applicator apparatus and is structured to attach, by means of pressing rollers, the foil against the outer shape of the profile, so as to cause the foil to firmly adhere to the profile.

As far as the primer applicator apparatus is concerned, on the other hand, it is arranged along the feeding path upstream of the glue applicator apparatus on the axially opposite side relative to the fixing assembly and is designed to apply a liquid primer on the outer surface of the profile before the foil is fixed on the latter.

Some primer applicator apparatuses are provided with sliding pads made of felt, which are placed in contact with the outer surface of the profile. During the feeding of the profile, said felt pads spread the primer on the surface of the profile. The primer, thanks to its chemical action, causes the detachment of residues present on the surface of the profile, thus making the latter chemically compatible with the gluing of the foil.

In particular, the pads, besides the etching action, exert a light abrasion upon the surface of the profile in order to clean the detached residues from the latter and prepare it for the gluing of the foil.

A technical problem affecting the primer applicator apparatuses described above lies in the fact that the pads, over time, tend to wear and to become saturated with residues and, as a consequence, must be replaced with a certain frequency. However, the replacement of the pads determines an undesired standstill of the machine, which affect the productive ability and the production costs thereof. Furthermore, in case of incorrect positioning of the pads, there is a wrong distribution of the primer of the profile, which jeopardizes the gluing and determines a increase in the number of rejected items.

Another type of primer applicator apparatuses is based on the so-called vacuum technology. These apparatuses basically involve the use of a vacuum chamber, where a head or template is arranged, which has a through opening shaped so as to be complementary to the cross section of the profile, so that the latter can go through it. In use, the depression generated in the chamber crossed by the profile causes an atomization of the primer, which is evenly distributed on the surface to be wrapped of the moving profile.

A technical problem affecting vacuum primer applicator apparatuses lies in the fact that they are scarcely versatile, namely they can hardly be adjusted to profile production changes. In other words, when the profile to be wrapped has a new shape that is different from the one of the previous profile, the template present in the chamber needs to be replaced by a new template.

This operation, besides causing an undesired standstill of the machine, involves intervention activities (for the replacement of the templates) that significantly affect production costs.

Furthermore, vacuum primer applicator apparatuses suffer from the technical problem of only working with primers that are scarcely aggressive from the chemical point of view and, therefore, are not suited to be used with highly chemically aggressive primers. This limitation determines a limited capacity of detaching and removing residues from the profile and often is a cause of incomplete gluing of the foil on the profile.

Moreover, vacuum primer applicator apparatuses suffer form the technical drawback of being subjected to quantitative errors in the distribution of the primer, which are due to dimensional differences of the profiles (tolerances). Furthermore, vacuum primer applicator apparatuses are affected by the technical problem of being subjected to a high primer dispersion. Indeed, the vacuum chamber accelerates the evaporation of the primer deposited on the profile, thus jeopardizing the completion of its residue detaching action.

Furthermore, known machines of the type described above suffer from the technical problem of having a large axial size (length). This problem is basically due to the need for the presence of a primer drying segment. In known machines, the drying segment extends along the feeding path between the primer applicator apparatus and the fixing assembly and has the function of having the primer dry before the gluing step.

### DISCLOSURE OF INVENTION

Therefore, the object of the invention is to provide a method and a machine for wrapping profiles with a foil, which overcome the technical problems discussed above.

According to the invention, there are provided a method and a machine for wrapping profiles according to the relative appended claims.

### BRIEF DESCRIPTION OF THE DRAWINGS

The invention will now be described with reference to the accompanying drawings showing a non-limiting embodiment thereof, wherein:
- Figure 1 is a perspective view, with parts removed for greater clarity, of a profile wrapping machine according to the invention,
- Figure 2 is a perspective view, on a larger scale, of the foil applicator assembly of the machine shown in Figure 1,
- Figure 3 is a side elevation view, on a larger scale, of the foil applicator assembly of the machine shown in Figure 1,

- Figure 4 is a schematic perspective view, with parts removed for greater clarity, of the foil applicator assembly available in the machine shown in Figure 1,
- Figure 5 is a perspective view, on a larger scale, of the foil applicator assembly of the machine shown in Figure 1,
- Figures 6, 7 and 8 schematically show corresponding examples of distribution of the primer on the bonding surface of the foil, carried out according to the method of the invention.

### BEST MODE FOR CARRYING OUT THE INVENTION

The invention will now be described in detail with reference to the accompanying Figures, so as to allow a person skilled in the art to carry it out and use it. Possible changes to the embodiments described herein will immediately be evident to skilled people and the generic principles described herein can be applied to other embodiments and applications without for this reason going beyond the scope of protection of the invention as it is defined in the appended claims. Therefore, the invention cannot be considered as limited to the embodiments described and shown herein, but it has to be associated with the widest scope of protection possible in accordance with the principles and the features described and claimed herein.

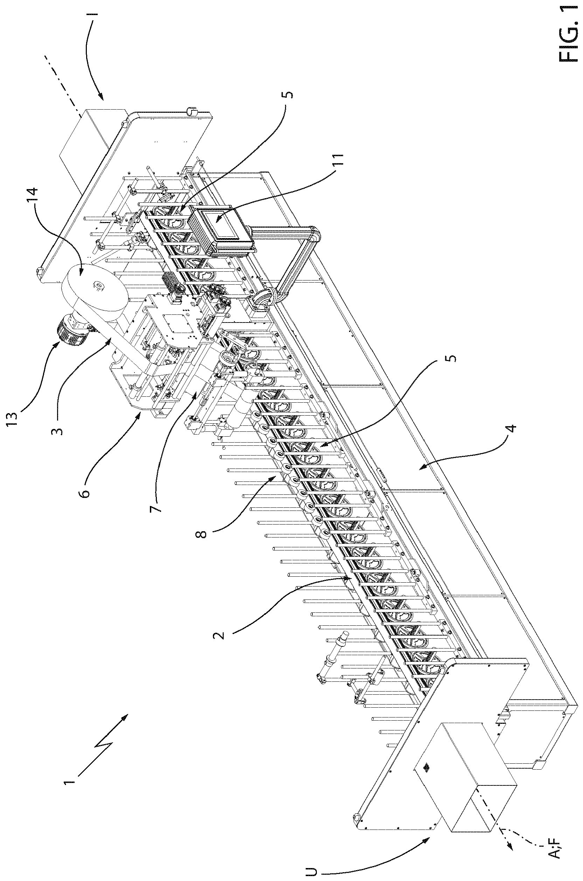

With reference to Figures 1 to 5, number 1 indicates, as a whole, a machine for wrapping profiles 2 with a foil 3. Hereinafter, the term "wrapping" indicates any operation aimed at coating and/or ennoble a profile or section bar 2 by means of a decorative and/or coating foil 3, namely a sheet or film.

As a matter of fact, the invention relates to a machine structured to firmly couple and/or attach and/or fix (in a rigid and permanent manner) a foil 3 on an outer surface 2a of the profile 2, so as to coat it.

According to a preferred embodiment, the profile 2 can conveniently be a component of a frame of a window/door or the like.

However, the invention is not limited to a machine for wrapping profiles 2 for (door/window) frames, but is suited to also wrap, alternatively or in addition, other types of profiles 2, namely profiles for different uses/applications, such as for example: baseboards and/or window sills, home furnishing elements (furniture) or the like.

According to a preferred embodiment, the profiles 2 to be wrapped (hence, raw, non-wrapped profiles) can be made of a rigid material. The rigid material can preferably be a metal material and/or a plastic material. The metal material can comprise, for example, an aluminium alloy. Conveniently, a profile 2 can be made of aluminium and have a painted outer surface 2a. The plastic material can comprise, for example, a plastic polymer. The plastic polymer can comprise, for example, polyvinyl chloride (PVC) or polypropylene or similar materials.

According to a possible explanatory embodiment, the profiles 2 have an oblong straight shape. The profiles 2 can comprise, for example, straight bars or rods. According to a possible explanatory embodiment, the profiles 2 can be obtained by means of an extrusion process. The cross section of the profile 2, which is transverse to its longitudinal axis (moulding), has a predetermined geometry, which depends on the type of application of the profile, for example on the frame type and shape. The geometry of the cross section can be, for example, polygonal and/or square and/or rectangular and/or curved and/or circular and/or semicircular and/or a combination chosen from: polygonal and/or curved and/or circular and/or semicircular, or any similar configuration/combination.

It should be pointed out that the profile wrapping machine 1 can be independent of/distinct from other machines/plants or, alternatively, it can be a component (operating station) of a complex plant/system (not shown herein) comprising a series of other profile processing machines (not shown herein), which define corresponding in-line work stations cooperating with one another in order to provide, at the end of the production line, a complete product defined by the profile 2 wrapped with the foil 3. For example, the profile wrapping machine 1 can be an "online" machine, namely it can be arranged immediately downstream of and in-line with an extrusion plant for (raw) profiles 2 (not shown herein) so as to receive raw (non-wrapped) extruded profiles 2 from the latter. According to an alternative embodiment, the profile wrapping machine 1 can be an "off-line" machine, namely it is completely independent of other plants, which means that it is not (mechanically) associated with them.

According to a possible embodiment, the foil 3 can preferably - though, not necessarily - have an approximately band-like structure and be thin, flat and flexible. The foil 3 can preferably - though, not necessarily - be a multi-layer foil made of a plastic material. According to a possible explanatory embodiment, the foil 3 can comprise a band preferably consisting of one or two thin layers on top of one another. One layer is suited, in use, to be fixed on the surface 2a to be wrapped of the profile 2, preferably has, on the outside, the decoration that is going to be in view and can be made of polyvinyl chloride (PVC). The other layer can be made of a transparent plastic material, conveniently, for example, polymethyl methacrylate (PMMA), in order to filter UV rays. However, it should be pointed out that the invention is not limited to a multi-layer foil 3 comprising the two layers described above, but it can consists of a number of plastic material layers greater than two.

According to an explanatory embodiment, the foil 3 can have a width ranging from circa 25 mm to circa 350 mm.

According to a possible embodiment, the profile wrapping machine 1 comprises a support stand 4 resting on the ground, which extends along a longitudinal axis A, and a profile conveyor device 5 preferably supported by (associated with) the support stand 4.

The profile conveyor device 5 is structured to move (feed), on command, the profiles 2, preferably arranged in a row, one after the other, above the support stand 4, from an input station I to an output station U of the profile wrapping machine 1 along a feeding path F, which is substantially parallel to the longitudinal axis A. According to a preferred explanatory embodiment shown in Figure 1, the longitudinal axis A preferably is approximately horizontal.

According to a preferred explanatory embodiment shown in Figures 1-5, the profile conveyor device 5 can comprise a plurality of wheels or rollers 10 to move/feed the profiles 2 along the feeding path F from the input station F to the output station U. The rollers 10 can be mounted one after the other on the support stand 4, so that they can rotate around relative, preferably parallel/coplanar rotation axes, which are spaced apart from one another and are transverse to the longitudinal axis A.

According to a preferred explanatory embodiment shown in Figure 1, the rollers 10 can be caused to rotate around the relative rotation axes by one or more driving units, preferably electric motors (not shown herein). The rollers 10 are known and will not be described any further, if not to pint out that they can conveniently have annular outer edges, which are transverse to the longitudinal axis A and are shaped so as to support and move (feed) the profiles 2 in a row one after the other along the feeding path F. The electric motors of the driving units can electrically be connected to an electronic control unit 11 in order to be controlled by the latter. The electronic control unit 11 is comprised in the profile wrapping machine 1. The electronic control unit 11 can be configured so as to control the driving units through electric commands in order to adjust/control the rotation speed of the rollers 10 and, as a consequence, the feeding speed of the profiles 2 along the feeding path F, based on setting parameters and/or on an operating program/algorithm controlling the wrapping operations.

With reference to Figures 1-5, the profile wrapping machine 1 preferably comprises, in addition, an applicator device 6, which is designed to apply a bonding (gluing) layer on a face or surface 3a of the foil 3.

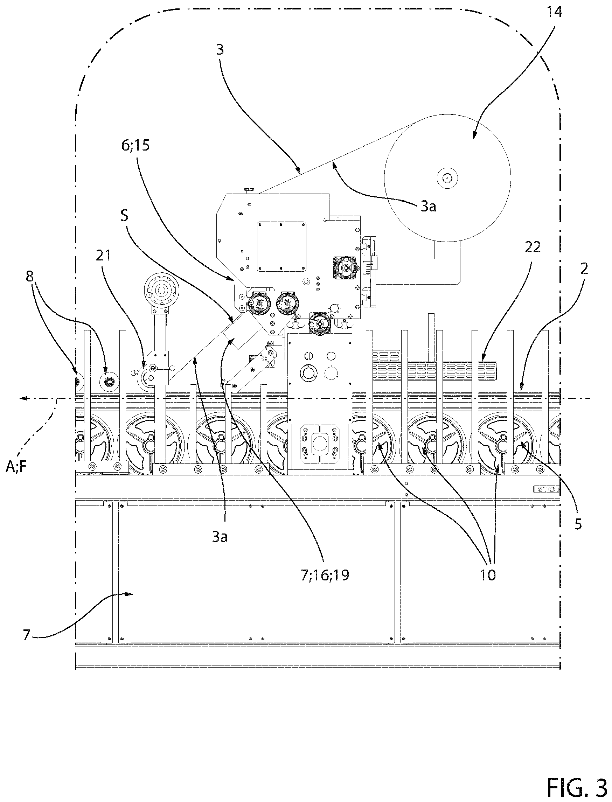

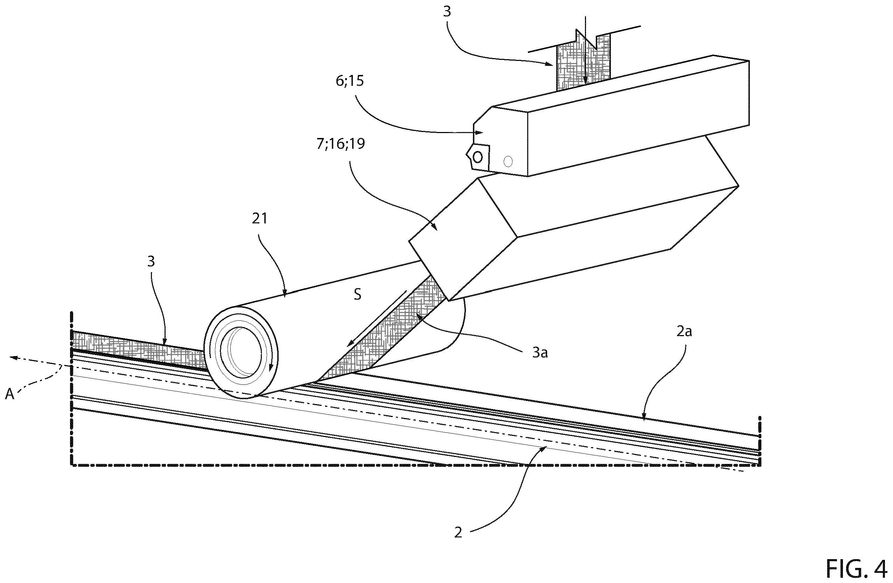

According to the preferred embodiment of the invention, the profile wrapping machine 1 conveniently further comprises a primer applicator device 7, which is designed to apply a primer on the surface 3a of the foil 3 (lower surface 3a in Figures 3 and 4).

With reference to Figure 1-5, the profile wrapping machine 1 further comprises fixing devices 8, which are structured so as to couple the foil 3 to the surface 2a to be wrapped of the profiles 2. The fixing devices 8 are structured so as to press the foil 3 against the profiles 2 in a continuous and synchronized manner with the movement of the profiles 2 along the feeding path F (namely, without interruptions in the movement of the profiles). The fixing devices 8 are structured so that the surface 3a of the foil 3 provided with the bonding layer and provided with the primer is pressed against and tightly wraps the surface 2a of the profiles 2, so as to wrap it and firmly adhere to it, in order to complete the coupling.

According to a preferred embodiment shown in Figures 1-5, the primer applicator device 7 is arranged downstream of the applicator device 6 along the foil application path 3 towards the profile 2.

In the embodiment shown in the accompanying Figures, the primer applicator device 7 is designed to apply a predetermined quantity of primer on the surface 3a of the foil 3 immediately after the application of the bonding layer carried out by the applicator device 6 and immediately before the coupling of the foil 3 to the surface 2a of the profile 2 carried out by the fixing devices 8.

According to the preferred embodiment shown in the accompanying Figures, the primer applicator device 7 is designed to deposit/apply, in a controlled and continuous manner (namely, without interruptions), a predetermined quantity of primer on the bonding layer present on the surface 3a of the foil 3 immediately before the surface 3a of the foil 3 is fixed on the surface 2a of the profile 2 by means of the fixing devices 8.

Tests carried out by the Applicant have shown that the application of the primer directly on the bonding layer present on the surface 3a of the foil 3, before fixing the foil 3 on the profile 2, leads to a complete and stable gluing of the foil 3 on the profile 2.

In particular, tests carried out by the Applicant have shown that the application of the primer directly on the bonding layer accelerates the cross-linking of the gluing and/or adhesive material and increases the grip, namely the fixing (in terms of holding force), of the foil 3 on the profile 2.

A technical effect obtained thanks to the application of the primer directly on the surface 3a of the foil 3 on which there is the bonding layer is that of eliminating the need to have, along the machine 1, a primer drying segment upstream of the fixing devices 8. The elimination of the drying segment determines a significant reduction in the total axial length of and, hence, in the space taken up by the machine 1.

According to a preferred embodiment shown in Figures 1-5, the applicator device 6 is mounted on the support stand 4 in an approximately intermediate position along the feeding path F above the rollers 10. In the example shown herein, the applicator device 6 is mounted on the support stand 4 by means of a support frame 12.

According to the embodiment shown in Figures 1-5, the support frame 12 can support, at the top, a swift 13, on which a reel 14 of foil 3 is mounted in a rotary manner. Obviously, the reel 14 is formed by the band-like foil 3 rolled around the axis of the reel.

According to the embodiment shown in Figures 1-5, the applicator device 6 is provided with a spreading head 15. The spreading head 15 is structured to receive a gluing and/or adhesive material to create the bonding layer. The gluing and/or adhesive material can comprise a hygroreactive hot-melt glue-based mixture. Preferably, the glue can be a polyurethane-based glue (PUR). Preferably, the gluing and/or adhesive material can comprise at least the following glues: a hot-melt polyurethane glue (HM PUR), a reactive hot-melt polyurethane glue (RHM PUR), a moisture curing hot-melt polyurethane glue (MCHM PUR).

In addition or alternatively, the gluing and/or adhesive material can comprise adhesive mixtures of high molecular weight polyester and/or MDI (isocyanates)

The gluing and/or adhesive material can preferably be heated and can be liquid or half-liquid. The spreading head 15 can hydraulically be connected to a measuring system (not shown), which is provided with solenoid valves and one or more tanks, so as to receive the gluing and/or adhesive material from the latter in a controlled manner. The measuring system, as it is not part of the subject-matter of the invention, will not be further described herein. The spreading head 15 is controlled by the electronic control unit 11 so as to deposit/spread, in an even manner, a predetermined (measured) quantity of gluing and/or adhesive material on the surface 3a of the foil 3 in a continuous manner, namely during the movement of the foil 3 along its application path towards the profile 2 lying underneath. Preferably, the predetermined quantity of gluing and/or adhesive material applied on the surface 3a can range from circa 20 g/m² to circa 100 g/m².

The applicator device 6 can be provided with a feeding member for the foil 3, which is designed to unwind the foil 3 from the reel 14 in a continuous and controlled manner and moves/feeds the foil 3 downwards, namely towards the support stand 4 along a bonding layer application segment, in which the spreading head 15 applies/spreads the gluing and/or adhesive material on the surface 3a of the foil 3 so as to form the bonding layer with a predetermined even thickens along the entire width of the foil 3.

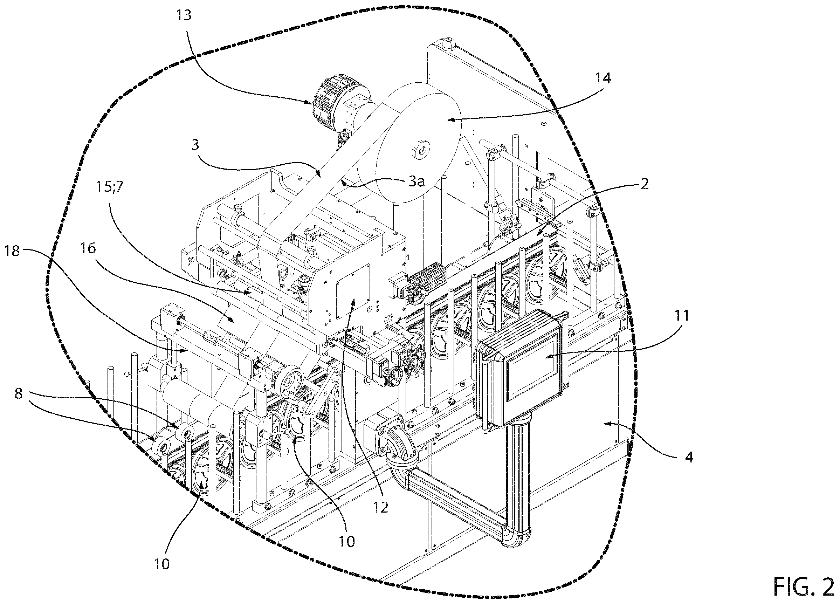

According to an embodiment shown in Figure 2, the feeding member can comprise, for example, a series of dragging rollers for the foil 3 connected to the support frame 12. The rollers can be arranged in pairs in mutually adjacent positions and be axially fixed, with the ends, on two opposite vertical walls of the support frame 12. The rollers are designed to rotate, in use, around the relative axes so as to move/feed the foil 3 along the bonding layer application segment, so as to allow the spreading head 15 to apply the gluing and/or adhesive material on the surface 3a of the foil 3.

According to the preferred embodiment shown in the accompanying Figures, the applicator device 6 and the primer applicator device 7 form a foil applicator assembly of the machine 1, which, in the example shown herein, is arranged in an intermediate position of the support stand 4 immediately upstream of the fixing devices 8.

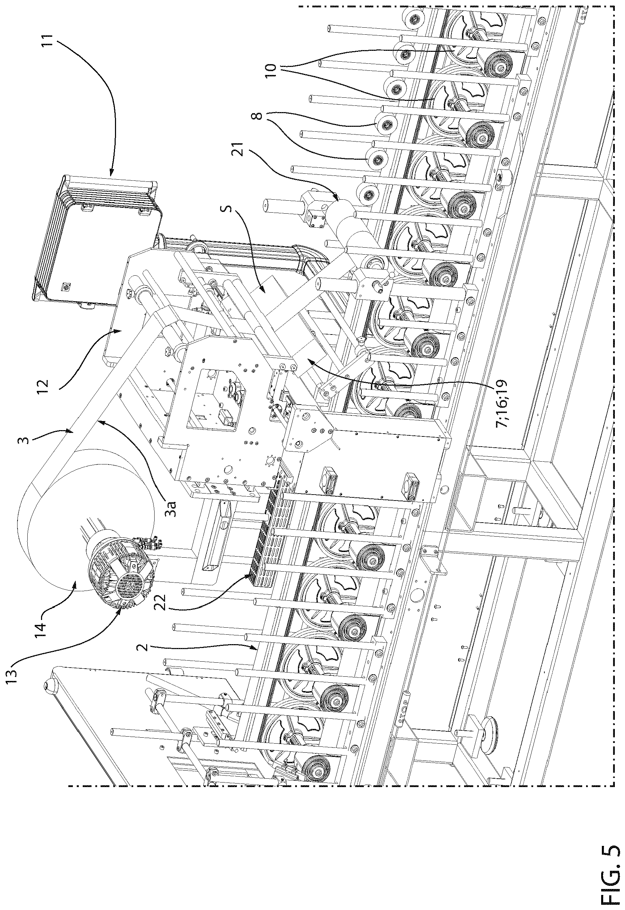

According to an embodiment shown in Figures 2 and 5, the primer applicator device 7 is provided with a primer applicator head 16. The primer applicator head 16 is arranged downstream of the spreading head 15 along the feeding direction of the foil 3 towards the profiles 2 and is designed to apply a predetermined quantity of liquid primer on the surface 3a of the foil 3.

According to an embodiment, the primer applicator head 16 is firmly connected to the support frame 12 so as to intercept, namely come into contact with or be adjacent to, the foil 3 along a feeding segment S thereof.

The primer applicator device 7 can further comprise, a feeding assembly, which is designed to receive, as an input, the foil 3 from the applicator device 6, feeds the foil 3 along a segment, in which the primer applicator device 7 applies the primer on the surface 3a, and supplies to the foil 3 to the fixing devices 8, as an input. The feeding assembly can comprise a series of rollers (and/or counter-rollers), some of them being connected to the support frame 12 and cooperating with a rotary roller or drum 21 arranged underneath in order to stretch the foil 3 along its application path and along the primer application segment S.

According to an explanatory embodiment shown in Figure 5, the feeding assembly for the foil 3 feeds the foil 3 along the primer application segment S so that the primer applicator head 16 is capable of applying a predetermined quantity of primer on the bonding layer present on the surface 3a of the foil 3.

The primer is liquid and can consist of a liquid mixture/compound made up of adhesion promoter and/or activation substances. The liquid mixture/compound of the primer comprises a solvent advantageously consisting of: acetone and/or methyl ethyl ketone (MEK) and/or butanone and/or ethyl acetate and/or dimethyl sulfoxide (DMSO) and/or cyclohexanone, and/or di-propylene glycol dimethyl ether and/or isopropyl acetate and/or ethanol and/or propan-2-ol, 2-pyrrolidone.

According to an embodiment, UV tracing compounds can conveniently be added to the primer.

The machine 1 can further be provided with image capturing devices (cameras or video cameras, which are not shown herein), which capture the image of the surface 3a on which the primer was applied and transmit it to the electronic control unit 11.

The electronic control unit 11 can process the received images in order to determine the distribution of UV traces on the surface 3a. The electronic control unit 11 can determine the condition of correct application/distribution of the primer on the surface 3a of the foil 3 based on the comparison between the distribution of UV traces (determined through the processing of the images) and a predetermined primer distribution, for example stored in the unit 11.

According to a possible embodiment, the primer applicator head 16 comprises one or more printing heads 19, which are controlled by the electronic control unit 11. The printing heads 19 are structured so as to deposit, on command, very small drops or micro-drops of liquid primer on the surface 3a of the foil 3. The printing head/s 19 are conveniently structured so as to have/integrate an "inkjet printing head" technology and are designed to release/project the micro-drops, for example having a volume in the range of picoliteres (10⁻¹² litres), in a controlled manner on the surface 3a of the foil 3 based on electric commands provided by the electronic control unit 11. In this case, the liquid primer is obviously released by the printing heads in the same way as an "ink". The printing head or heads 19 can conveniently be manufactured as described European patent application no. EP 3 281 770 A1 of the Applicant, whose contents (description and drawings) are completely included herein by way of reference. The Applicant found out that printing heads produced by Xaar, Konica Minolta, Seiko, Trident^{®} could be advantageous.

The Applicant further found out that inkjet printing heads using a DOD (Drop On Demand) technology could be advantageous. Preferably, the inkjet printing heads can be use a thermal DOD technology or a piezoelectric DOD technology. Furthermore, the Applicant found out that it could be advantageous to use printing heads corresponding to industrial marking apparatuses using inkjet printing with a high resolution (for example, a resolution ranging from 20 to 600 DPI, dots per inch).

By mere way of non-limiting example, namely without losing generality, the Applicant found out that a printing head installable in the machine 1 could correspond, for example, to the industrial marking apparatuses using high-resolution inkjet printing known as XAAR 1003.

The primer applicator head 16 is controlled so as to apply the liquid primer in a selective manner on predetermined superficial portions of the surface 3a of the foil 3.

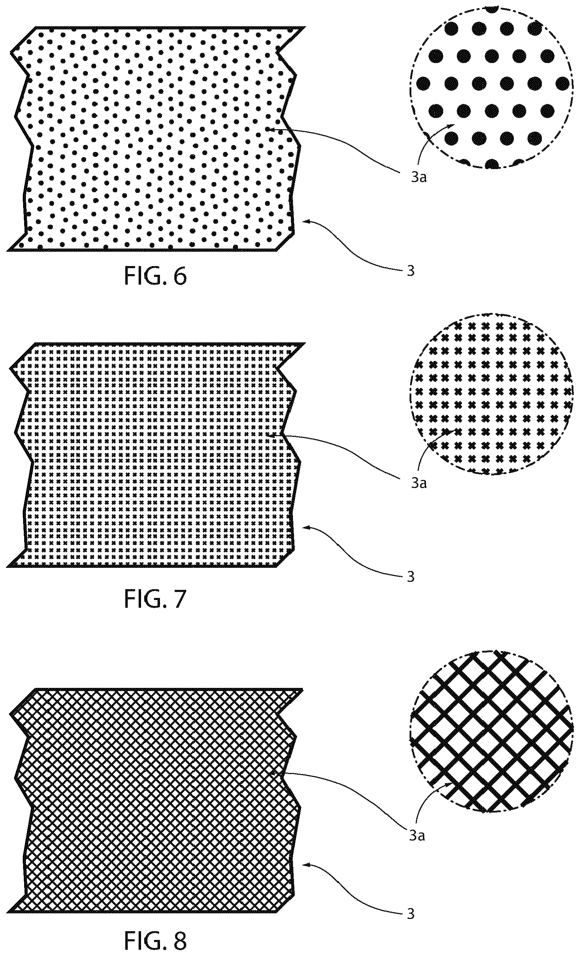

Conveniently, the primer applicator head 16 is controlled so as to apply the liquid primer in a selective and/or even manner on predetermined superficial portions (areas) of the surface 3a of the foil 3 according to a geometric spot distribution (wherein the spots are the predetermined portions). Preferably, the spots are spaced apart from one another. The spots can be distributed on the surface 3a so as to be aligned along rows and/or directions that are parallel to one another and transverse to the longitudinal axis of the foil 3 and/or along directions that are parallel to one another and orthogonal to foil (Figure 6). Conveniently, the distance between a primer application spot on the surface 3a and an adjacent spot can range from circa 0.2 mm to circa 0.8 mm. In this case, the foil 3 and the profiles 2 can be fed at a speed ranging from circa 3 to circa 50 m/minute. The Applicant found out that it is convenient to apply, on the surface 3a of the foil 3, a quantity of primer ranging from circa 0.5 g/m2 to circa 10 g/m2. The Applicant further found out that the use of inkjet printing heads is extremely convenient for it leads to a very high precision in the measuring and application of the liquid primer on the surface 3a.

Alternatively or in addition, the primer applicator head 16 is controlled by the electronic control unit 11 so as to apply the liquid primer in a selective manner on mutually independent and separate superficial portions having respective polygonal and/or circular and/or cross shapes. For example, the superficial portions spaced apart from one another can have one or more of the following shapes: rhombus, right square, triangle, circle. Alternatively or in addition, the superficial portions can comprise straight lines that are parallel to the foil feeding path and/or straight lines that are transverse to the foil feeding direction and/or crossed straight lines (intersecting superficial portions). Figures 7 and 8 show examples of some geometries implemented by the Applicant for the application of the primer on the surface 3a.

The inkjet printing heads 19 can operate in a direct manner or in an indirect manner, namely through transfer.

Obviously, the invention is not limited to a primer applicator head 16 comprising inkjet printing heads 19, but it can include, alternatively or in addition, the use of a precision spray apparatus (which is not shown herein). The spray apparatus can be structured to spray, in a controlled manner, the predetermined quantity of liquid primer on the surface 3a according to the predetermined distribution (for example, through the use of filters).

Obviously, the invention is not limited to a primer applicator head 16 comprising inkjet printing heads 19, but it can include, alternatively or in addition, the use of an applicator roller (which is not shown herein) . The applicator roller can comprise, for example, a cylindrical measuring drum, whose outer cylindrical surface is shaped according to the geometric distribution of the primer to be obtained on the surface 3a.

According to a possible embodiment, the machine 1 can further comprise heating devices 22 designed to pre-heat the raw profile 2 before the application of the foil 3 so as to further improved gluing performances. In the example shown in Figures 1-5, the heating devices 22 are arranged upstream of the fixing devices 8 along the feeding path F. The heating devices 22 can be designed to heat the surface 2a in order to cause it to reach a temperature ranging from 35°C to 65°C. According to a preferred embodiment, the heating devices 22 can comprise electric heaters and emit hot air towards the profile 2.

The method for wrapping the profile 2 with the foil 3 comprises: receiving, in the input station I of the machine 1, the raw (non-wrapped) profiles 2, feeding the profiles 2 by means of the conveyor device 5 in a continuous manner (without interruptions) at a given speed along the feeding path F, preferably heating the surface 2a of the profiles 2 by means of the heating devices 22 (before the application of the foil 3).

The method further comprises, in sequence, the steps of: unwinding the foil 3 from the reel 14 in a continuous manner and, at the same time, feeding the foil 3 along the application path in a continuous manner (without interruptions) and at a predetermined speed, which depends on the moving speed of the profiles 2 along the feeding direction F.

The method comprises the step of applying the bonding layer on the surface 3a of the foil 3 during its movement, by means of the applicator device. Obviously, according to a possible variant of the invention (which is not shown herein), the foil 3 can be prepared so as to have the bonding layer on the surface 3a; according to this variant, the machine 1 can lack the applicator device 6.

The method further comprises the step of applying, by means of the primer applicator device 7, the liquid primer on the bonding layer present on the surface 3a of the moving foil 3. The method comprises the step of coupling the foil 3 to the surface 2a of the moving profiles 2 lying underneath along the feeding path F, so that the surface 3a of the foil 3 provided with the bonding layer and with the primer firmly adheres to the surface 2a of the profiles 2.

Furthermore, according to the method, the primer is applied, by means of the primer applicator device 7, on the bonding layer of the surface 3a immediately before the coupling of the latter to the surface 2a of the moving profiles 2 by means of the fixing devices 8.

The advantages of the machine and of the method described above are the following. The machine eliminates the use both of pads and of the vacuum chamber for the application of the primer. This reduces setup and maintenance times of the machine. The use of inkjet printing heads for the application of the primer increases the precision in the application of the primer on the profile and reduces critical aspects associated with the gluing of the foil, namely incomplete gluing and rejected items. The application of the primer on the foil eliminates the drying segment traditionally present upstream of the foil applicator assembly and, hence, reduces the length of the machine.

Finally, it is clear that the profile wrapping method and machine described above can be subjected to changes and variations, without for this reason going beyond the scope of protection of the invention.

## Claims

1. A method for wrapping profiles (2) with a wrapping foil (3) **characterised in that** it comprises the steps of:
a) moving the profiles (2) along a pre-established feeding path (F),
b) moving a wrapping foil (3) towards the profiles (2) so that a first surface (3a) of said foil (3), provided with a first bonding layer of glue and/or adhesive based material, is arranged adjacent to and facing a surface to be wrapped (2a) of said profiles (2),
c) applying a pre-established amount of primer on said first surface (3a) of the foil (3),
d) applying the foil (3) on said surface to be wrapped (2a) of the profiles (2), so as to cause the fixing of the first surface (3a) of the foil (3) on said surface to be wrapped (2a) of the profiles (2).

2. The method according to claim 1, comprising in sequence the steps of:
applying said first bonding layer on said first surface (3a) of the foil (3),
applying a pre-established amount of primer on the first bonding layer present on said first surface (3a) of the foil (3),
firmly fixing the first surface (3a) of the foil (3) provided with the bonding layer on said surface to be wrapped (2a) of the profiles (2) by fixing means (8).

3. The method according to claim 1 or 2, comprising the step of selectively applying pre-established amounts of said primer on respective portions of pre-established areas of said first surface (3a) of the foil (3).

4. The method according to any one of the preceding claims, comprising the step of selectively applying pre-established amounts of said primer on respective portions of point-like areas of said first surface (3a) of the foil (3).

5. The method according to any one of the preceding claims, comprising the step of applying established amounts of said primer on said surface (3a) of said foil (3) by printing means (19).

6. The method according to any one of the preceding claims, comprising the step of applying a pre-established amount of said primer on said surface (3a) of said foil (3) by spraying means.

7. The method according to any one of the claims from 2 to 4, comprising the step of applying a pre-established amount of said primer on said surface (3a) of said foil (3) by roller means.

8. The method according to any one of the preceding claims, wherein said first bonding layer comprises at least one polyurethane based hot-melt glue.

9. The method according to any one of the preceding claims, wherein said primer comprises: an acetone and/or methyl ethyl ketone and/or ethyl acetate and/or dimethyl sulfoxide and/or Cyclohexanone, and/or Di-propylene glycol - dimethyl ether, and/or isopropyl acetate, and/or ethanol, and/or propan-2-ol, 2-pyrrolidone based liquid substance/mixture.

10. The method according to any one of the preceding claims, wherein said first bonding layer comprises a pre-established amount of glue and/or adhesive material, comprised approximately between 20 g/m² and approximately 100 g/m².

11. The method according to any one of the preceding claims, comprising the step of applying a pre-established amount of said primer on said first surface (3a) of the foil (3) as the foil (3) moves, in a continuous and synchronised manner together said profiles (2) as they are fed along said feeding direction (F).

12. The method according to any one of the preceding claims, comprising the step of applying on said first surface (3a) of said foil a pre-established amount of primer comprised between approximately 0.5 g/m² and approximately 10 g/m².

13. A machine for wrapping profiles (1) structured so as to coat profiles (2) with a wrapping foil (3),
said machine comprising:
conveyor means (5) designed to move the profiles (2) along a pre-established feeding path (F),
feeding means designed to move a foil (3) towards said profiles (2) so that a first surface (3a) of said foil (3), provided with a first bonding layer of glue and/or adhesive based material, is arranged adjacent to and facing a surface to be wrapped (2a) of said profiles (2),
first applicator means (7) for applying a pre-established amount of primer on said first surface (3a) of the foil (3),
fixing means (8) for making the foil (3) adhere to said surface to be wrapped (2a) of the profiles (2), so as to cause the fixing of the first surface (3a) of the foil (3) onto said surface to be wrapped (2a) of the profile (2).

14. The machine according to claim 13, comprising second applicator means (6) designed to apply said first bonding layer on said first surface (3a) of the foil (3),
said first applicator means (7) are arranged downstream of said second applicator means along the feeding direction of said foil so as to apply a pre-established amount of primer on the first bonding layer present on said first layer (3a) of the foil (3),
said fixing means (8) are arranged in order to completely receive said foil (3) from said first applicator means (7) for firmly fixing the first surface (3a) of the foil (3) provided with the bonding layer on said first surface to be wrapped (2a) of the profiles (2).

15. The machine according to claim 13 or 14, wherein said first applicator means (7) are designed to selectively apply pre-established amounts of said primer on respective portions of pre-established areas of said first surface (3a) of the foil (3).
